# EUROPÄISCHE PATENTSCHRIFT

(11) **EP 1 793 715 B1**
(45) Veröffentlichungstag und Bekanntmachung des Hinweises auf die Patenterteilung: **22.09.2010**
(21) Anmeldenummer: 05777988.6
(22) Anmeldetag: 29.07.2005
(51) Int. Cl.: A47J 31/46

(54) **KAFFEEMASCHINE MIT EINEM AUSLAUFTOPF**
COFFEE MACHINE COMPRISING A POURING CUP
MACHINE A CAFE A CREUSET DE DECHARGE

(30) Priorität: 24.09.2004 DE 102004046453
(43) Veröffentlichungstag der Anmeldung: 13.06.2007
(73) Patentinhaber: BSH Bosch und Siemens Hausgeräte GmbH, 81739 München (DE)
(72) Erfinder: WEISS, Florian, 83278 Traunstein (DE)
(86) Internationale Anmeldenummer: PCT/EP2005/053711
(87) Internationale Veröffentlichungsnummer: WO 2006/032567

(56) Entgegenhaltungen:
- EP-A- 0 904 718
- US-A- 5 242 702

## Beschreibung

Die Erfindung betrifft eine Kaffeemaschine gemäß dem Oberbegriff des Anspruchs 1.

Kaffeemaschinen des Standes der Technik arbeiten nach unterschiedlichen Prinzipien. Die gängigsten Modelle sind die sogenannten drucklos arbeitenden Kaffeemaschinen. Bei diesen fließt Wasser aus einem Vorratsbehälter in ein elektrisch beheizbares Rohr. Insbesondere durch Dampfentwicklung in diesem Rohr wird erwärmtes Wasser dann durch eine Steigleitung zu einem Auslauf gedrückt, über welchen das erwärmte Wasser dann in einen Kaffeefilter tropft. Aus diesem Kaffeefilter kann der Filterkaffee bei atmosphärischem Druck dann in eine Kanne fließen.

Im Gegensatz hierzu liegt bei Espressomaschinen ein erhöhter Druck im Bereich des Kaffeemehls vor, beispielsweise 15 bar. Dies wird erreicht, indem Wasser aus einem Wasserbehälter oder einer sonstigen Wasserzuführung einer elektromotorisch angetriebenen Pumpe zugeführt wird, die das Wasser dann unter hohem Druck über einen elektrisch heizbaren Bereich einer Kaffeemehlaufnahmeeinrichtung zuführt. Diese Kaffeemehlaufnahmeeinrichtung umfasst im Allgemeinen ein Sieb zur Aufnahme des Kaffees. Zur Erzeugung des hohen Drucks im Bereich des Kaffees ist die Kaffeemehlaufnahmeeinrichtung während des Betriebs in einem gegen die Atmosphäre abgedichteten Bereich angeordnet, der als Druckraum oder Brühkammer bezeichnet wird.

Bei einer weiteren prinzipiell anders arbeitenden Kaffeemaschine ist vorgesehen, das Wasser zur Zubereitung des Kaffees zunächst aus einem Wasserbehälter in einen beheizbaren Zwischenbehälter zu überführen. Von diesem Zwischenbehälter gelangt das erwärmte Wasser zu einer elektromotorisch angetriebenen Pumpe, von der es unter erhöhtem Druck, beispielsweise 2 bis 3 bar, einer in einer abgedichteten Brühkammer vorgesehenen Kaffeemehlaufnahmeeinrichtung zugeführt wird.

Bei einer besonderen, als sog. Kaffeepad-Maschine bezeichneten Form von Kaffeemaschinen mit einer Brühkammer, ist vorgesehen, dass der Kaffee nicht in loser Form als Kaffeemehl in die Kaffeemehlaufnahmeeinrichtung eingebracht wird, sondern in Form eines Kaffeepads, das heißt in verdichteter Form mit Filterpapier umgeben, in einen Halter eingelegt wird. Der Halter ist in einer Brühkammer angeordnet, die aus einem Brühkammeroberteil und einem dichtend mit diesem verbindbaren Brühkammerunterteil gebildet wird. Über das Brühkammeroberteil wird erhitztes Wasser bzw. Dampf in die Brühkammer zugeführt. Der Halter für die Kaffeepads kann Teil des Brühkammerunterteils oder als separates Teil in dieses eingesetzt sein. Das Brühkammerunterteil weist eine Auslassöffnung auf, aus der bereiteter Kaffee austreten kann. Der Halter kann so gestaltet sein, dass das erhitzte Wasser bzw. der Dampf weitestgehend ungehindert die Kaffeepads durchströmen kann.

Es sind Kaffeemaschinen bekannt, bei denen der Kaffee nicht direkt von der Brühkammer in den vom Benutzer bereitgestellten Auffangbehälter, wie z.B. eine Tasse, spritzt, sondern zunächst in einen Auslauftopf läuft und über ein Auslaufrohr in die Tasse geleitet wird. Der Auslauftopf dient zur Vermeidung von Verunreinigungen durch den aus der Brühkammer spritzenden Kaffee. In einem derartigen Auslauftopf ist zumindest eine Auslauföffnung vorgesehen, die üblicherweise mit einem Auslaufrohr in Verbindung steht, über das der Kaffee einer Tasse zugeführt wird. Beispielsweise offenbart die EP-A-0 904 718 eine Kaffeemaschine mit einer Brühkammer, die eine Austrittsöffnung aufweist, durch die Kaffee in einen Auslauftopf fließt, der mindestens eine Auslauföffnung zur Entnahme von Kaffee aufweist, wobei die Auslauföffnung in einem Auslauftopfboden vorgesehen ist, der in einem an die Auslauföffnung angrenzenden Bereich in Richtung auf die Auslauföffnung zu abgeschrägt ist. Die US-A-5 242 702 offenbart eine gattungsgemäße Vorrichtung zum Aufbrühen einer gerösteten und gemahlenen Kaffee enthaltenden geschlossenen Portionspackung.

Zwischen dem ebenen Auslauftopfboden und der Auslauföffnung beziehungsweise dem Auslaufrohr ergibt sich beim Stand der Technik eine Kante, welche die Kapillarwirkung beim Auslaufen des Kaffees behindert. Daher verbleibt unter Umständen Restflüssigkeit im Auslauftopf, was zu hygienischen Problemen führen kann.

Aufgabe der Erfindung ist es, die gattungsgemäßen Kaffeemaschinen derart weiterzubilden, dass die vorstehend erwähnten hygienischen Probleme sicher vermieden werden.

Diese Aufgabe wird mit den Merkmalen des Anspruchs 1 gelöst. Vorteilhafte Ausführungsformen und Weiterbildungen der Erfindung ergeben sich aus den Unteransprüchen.

Die Erfindung baut auf der gattungsgemäßen Kaffeemaschine dadurch auf, dass die mindestens eine Auslauföffnung in einem Auslauftopfboden vorgesehen ist, der in einem au die Auslauföffnung angrenzenden Bereich in Richtung auf die Auslauföffnung zu abgeschrägt ist, und dass sich der abgeschrägte Bereich durch einen Schlitz hindurch von einer ersten Kammer in eine zweite Kammer hinein erstreckt. Eine derartige Abschrägung durchbricht beziehungsweise verhindert die beim Stand der Technik zwischen dem Auslauftopfboden und der Auslauföffnung beziehungsweise dem Auslaufrohr vorhandene Kante. Durch den abgeschrägten Bereich wird ein Sog erzeugt, der die restliche Flüssigkeit aus dem Auslauftopf herauszieht, so dass dieser vollständig entleert wird und keine hygienischen Probleme durch Restflüssigkeit entstehen. Obwohl der zumindest eine abgeschrägte Bereich hier als dem Auslauftopfboden zugeordnet beschrieben wird, ist dem Fachmann klar, dass der abgeschrägte Bereich auch ganz oder teilweise durch andere Bestandteile (beispielsweise ein Auslaufrohr) gebildet werden kann, die dann im Sinne der Erfindung den Auslauftopf mitbilden.

Es ist vorgesehen, dass der Auslasstopf zumindest eine erste Kammer und zumindest eine zweite Kammer aufweist, die durch zumindest einen Schlitz in Verbindung stehen, durch den Kaffee von der ersten Kammer in die zweite Kammer gelangt, und dass die Auslassöffnung in der zweiten Kammer vorgesehen ist. Eine Anordnung von mehreren Kammern wirkt sich vorteilhaft auf die Cremaschaumbildung und die Gleichmäßigkeit des Kaffeeauslaufs aus.

Im vorstehend erläuterten Zusammenhang erstreckt sich der zumindest eine abgeschrägte Bereich durch den Schlitz hindurch von der ersten Kammer in die zweite Kammer hinein. Auf diese Weise können alle Kammern sicher vollständig entleert werden.

Gemäß einer vorteilhaften Weiterbildung der Erfindung ist vorgesehen, dass die erste Kammer einen ersten Kammerabschnitt und einen zweiten Kammerabschnitt umfasst, wobei in dem ersten Kammerabschnitt Cremaschaum gebildet wird, der dem zweiten Kammerabschnitt zugeführt wird. Dabei wird der Kaffeestrahl vorzugsweise direkt in die erste Kammer eingespritzt, deren Abmessungen, insbesondere deren Höhe, durch die erfindungsgemäße Lösung so optimiert werden kann, dass der eingespritzte Kaffee opti mal verwirbelt wird, was die Cremaschaumbildung begünstigt. Die Abmessungen der zweiten Kammer können dabei so optimiert werden, dass ein gleichmäßiges Füllen von einer oder mehreren (insbesondere zwei) Tassen erreicht wird. In diesem Zusammenhang kann insbesondere ein definiertes Überlaufen der zweiten Kammer vorgesehen sein, was später noch näher erläutert wird.

Bei bevorzugten Ausführungsformen der erfindungsgemäßen Kaffeemaschine ist weiterhin vorgesehen, dass der erste Kammerabschnitt und der zweite Kammerabschnitt benachbart zueinander angeordnet und ineinander übergehend ausgebildet sind. Dabei ist vorzugsweise ein vergleichsweise breiter Durchlass zwischen der ersten und der zweiten Kammer vorgesehen, durch den der in der ersten Kammer gebildete Cremaschaum ohne größere Strömungswiderstände in die zweite Kammer gelangen kann.

Insbesondere in diesem Zusammenhang wird bevorzugt, dass der zweite Kammer zumindest teilweise niedriger als der erste Kammerabschnitt ausgebildet ist. Dadurch wird erreicht, dass der in der zweiten Kammer enthaltene Cremaschaum, sobald er eine bestimmte Höhe erreicht hat, in zumindest einen Bereich überläuft, in dem zumindest eine Auslauföffnung vorgesehen ist. Auf diese Weise kann der zur Aufnahme des Kaffees vorgesehen Tasse ein besonders hochwertiger Cremaschaum zugeführt werden.

Allgemein wird es als vorteilhaft erachtet, wenn der zweiten Kammer Cremaschaum aus dem zweiten Kammerabschnitt zugeführt wird. Dabei wird es besonders bevorzugt, wenn jeder von vorzugsweise zwei Auslauföffnung eine weitere Kammer in symmetrischer Weise zugeordnet ist. In diesem Fall kann zwei Tassen gleichmäßig Kaffee mit hochwertigem Cremaschaum zugeführt werden.

Ein bevorzugtes Ausführungsbeispiel der Erfindung wird nachfolgend anhand der zugehörigen Zeichnungen beispielhaft erläutert.

Es zeigen:
- Figur 1: eine perspektivische Ansicht einer erfindungsgemäßem Kaffeemaschine;
- Figur 2: eine Schnittansicht der Kaffeemaschine von Figur 1;
- Figur 3: eine Schnittansicht eines Brühkammerunterteils der Kaffeemaschine von Figur 1;
- Figur 4: eine perspektivische, teilweise geschnittene Darstellung des Bereichs des Auslauftopfes der Kaffeemaschine von Figur 1;
- Figur 5: eine schematische Draufsicht auf den Auslauftopf der Kaffeemaschine von Figur 1;
- Figur 6: eine Schnittansicht des Auslauftopfes von Figur 5 entlang der Schnittlinie A-A; und
- Figur 7: eine Schnittansicht des Auslauftopfes von Figur 5 entlang der Schnittlinie B-B.

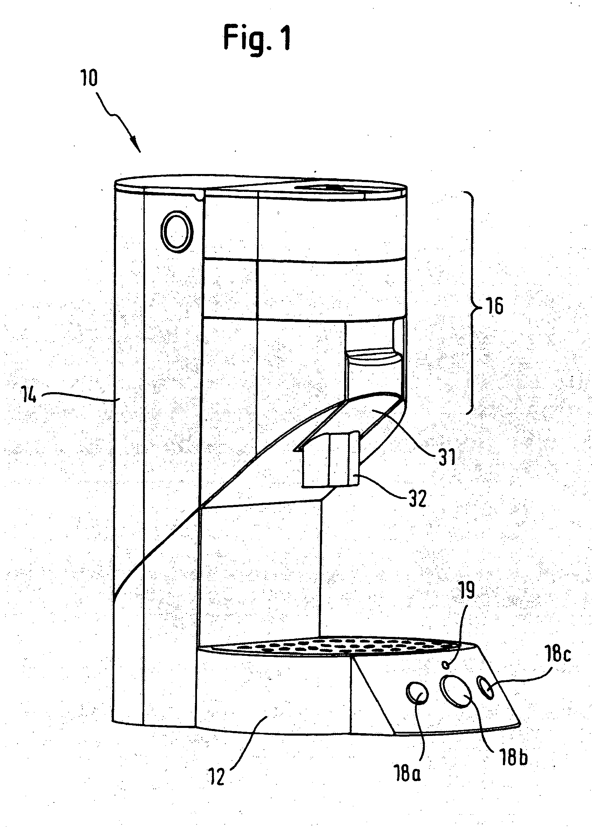

Figur 1 zeigt eine perspektivische Darstellung einer Kaffeemaschine 10. Die Kaffeemaschine 10 umfasst einen flachen Ständerteil 12, einen säulenartigen Vorrats- und Betriebsteil 14 und einen Kaffeebereitungsteil 16. Der Kaffeebereitungsteil 16 ist oberhalb des Ständerteils 12 an dem Vorrats- und Betriebsteil angeordnet. Im vorderen Bereich des Ständerteils 12 ist ein Bedienfeld mit mehreren Bedientasten 18a, 18b und 18c sowie einer Kontrollleuchte 19 angeordnet.

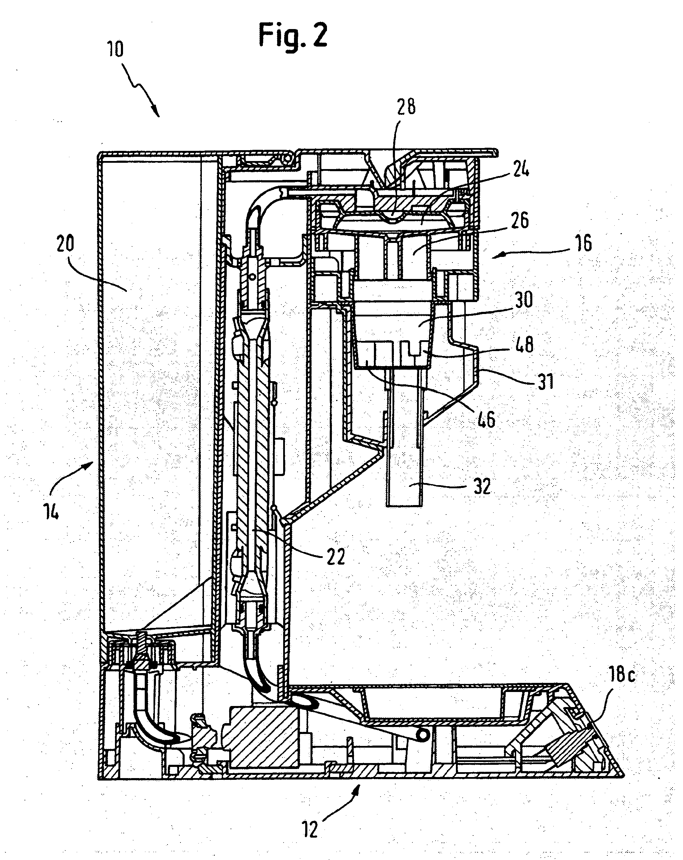

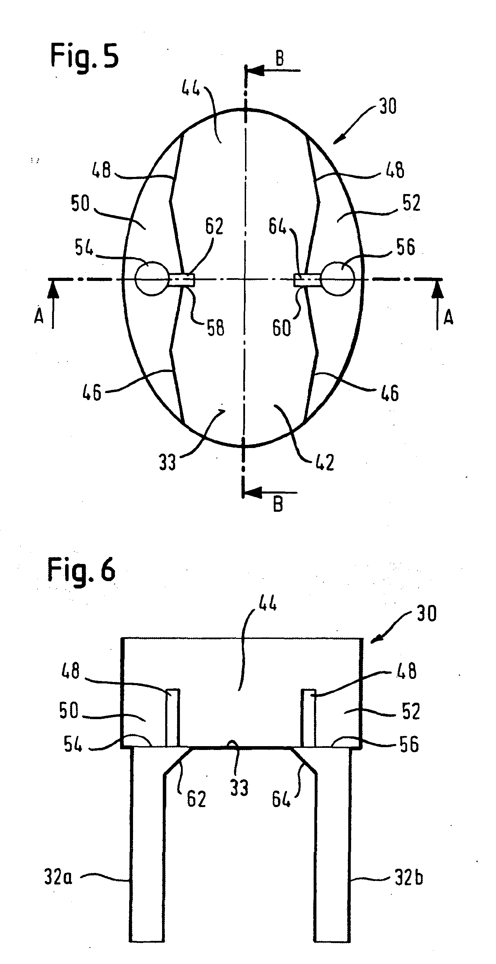

Figur 2 zeigt eine Schnittdarstellung derselben Kaffeemaschine 10. Der Vorrats- und Betriebsteil umfasst im Wesentlichen einen Wassertank 20, einen Durchlauferhitzer 22, eine nicht dargestellte Pumpe sowie verschiedene Verbindungsleitungen zwischen den genannten Elementen. Der Kaffeebereitungsteil 16 umfasst eine Brühkammer 24, umfassend ein Brühkammerunterteil 26 sowie ein Brühkammeroberteil 28. Unterhalb der Brühkammer 24 ist ein Auslauftopf 30 vorgesehen, in welchen bereiteter Kaffee von der Brühkammer 24 läuft. Der Auslauftopf 30 weist ein Auslaufrohr 32 auf, über welches bereiteter Kaffee in einen auf dem Ständerteil 12 bereitgestellten Auffangbehälter, z.B. eine Tasse, läuft. Der Auslauftopf ist von einem Auslaufgehäuse 31 umgeben. In dem Auslauftopf 30 sind mehrere Kammern vorgesehen, die zumindest Abschnittsweise durch erste und zweite Seitenwände 46, 48 begrenzt werden. Der Aufbau und die Funktion dieser Kammern wird später anhand der Figuren 5 bis 7 noch ausführlich erläutert.

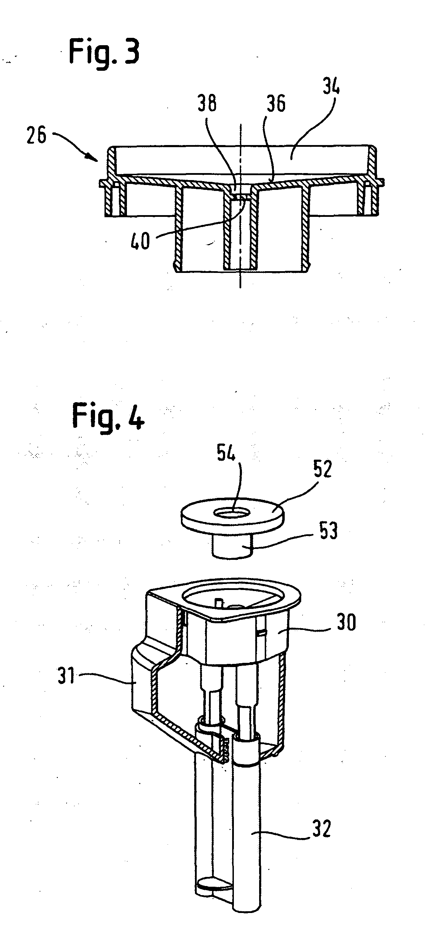

Figur 3 zeigt eine Schnittzeichnung durch das Brühkammerunterteil 26. Das Brühkammerunterteil 26 weist eine vorzugsweise runde Aufnahme 34 für (nicht dargestellte) Kaffeepads auf. Der Boden 36 der Aufnahme 34 ist vorzugsweise auf eine zentrale Vertiefung 38 hin abfallend ausgebildet. Zur Kaffeebereitung wird das Brühkammerunterteil 26 mit einem in Figur 3 nicht dargestellten Brühkammeroberteil dichtend verbunden, sodass erhitztes Brühwasser unter Druck den Kaffeepad in der Aufnahme 34 durchdringen kann. Der Kaffee wird dann durch eine Düse 40 in der zentralen Vertiefung 38 in den unter der Brühkammer 24 angeordneten Auslauftopf 30 gespritzt.

Figur 4 zeigt eine perspektivische, teilweise geschnittene Ansicht des Auslaufgehäuses 31, in welchem der Auslauftopf 30 mit den Auslaufrohren 32 gehaltert ist. Die relative Lage des Auslauftopfes 30 zu der Brühkammer ist aus Figur 2 ersichtlich. Oberhalb des Auslauftopfes 30 ist nach Art einer Explosionszeichnung eine sehr einfache Ausführungsform eines Deckels 52 dargestellt, der in die Öffnung des Auslauftopfes 30 dichtend eingebracht werden kann. Der Deckel 52 weist eine zentrale Öffnung 54 auf, durch welche der Kaffee von der Brühkammer 24 in den Auslauftopf 30 gelangen kann. Im unteren Bereich des Deckels 52 ist eine Rippenstruktur 53 angedeutet, die bei einigen Ausführungsformen vorgesehen sein kann, um mit den Seitenwänden zusammenzuwirken, welche die erste und/oder die zweite Kammer bilden.

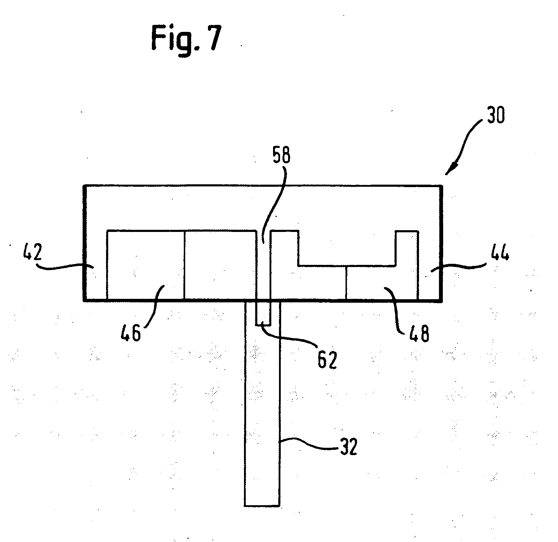

Figur 5 zeigt eine schematische Draufsicht auf den Auslauftopf der Kaffeemaschine von Figur 1, Figur 6 zeigt eine Schnittansicht des Auslauftopfes von Figur 5 entlang der Schnittlinie A-A, und Figur 7 zeigt eine Schnittansicht des Auslauftopfes von Figur 5 entlang der Schnittlinie B-B. Der dargestellte Auslauftopf 30 weist eine erste Kammer 42 auf, die durch erste Seitenwände 46 sowie einen Abschnitt der Außenwand des Auslauftopfes 30 gebildet wird. Benachbart zur ersten Kammer 42 ist eine zweite Kammer 44 vorgesehen, die durch zweite Seitenwände 48 sowie einen weiteren Abschnitt der Außenwand des Auslauftopfes 30 gebildet wird. Wie dies insbesondere Figur 5 zu entnehmen ist, gehen die erste Kammer 42 und die zweite Kammer 44 ineinander über. Die erste Kammer 42 und die zweite Kammer 44 unterscheiden sich dadurch voneinander, dass die zweiten Seitenwände 48 der zweiten Kammer 44 abschnittsweise niedriger ausgebildet sind als die ersten Seitenwände 46 der ersten Kammer 42, wie dies Figur 7 zu entnehmen ist. Durch die Anordnung der ersten und zweiten Seitenwände 46, 48 werden zwei weitere Kammern 50, 52 gebildet, nämlich eine dritte Kammer 50 und eine vierte Kammer 52. Die dritte Kammer 50 und die vierte Kammer 52 werden ebenfalls abschnittsweise durch die Außenwand des Auslauftopfes 30 begrenzt. Zwischen den ersten Seitenwänden 46 der ersten Kammer 42 und den zweiten Seitenwänden 48 der zweiten Kammer 44 ist ein erster Schlitz 58 und ein zweiter Schlitz 60 vorgesehen. Benachbart zum ersten Schlitz 58 ist in der dritten Kammer 50 eine erste Auslauföffnung 54 vorgesehen, die mit einem ersten Auslaufrohr 32a in Verbindung steht. Symmetrisch zu dieser Anordnung ist benachbart zum zweiten Schlitz 60 in der vierten Kammer 52 eine zweite Auslauföffnung 56 vorgesehen, die mit einem zweiten Auslaufrohr 32b in Verbindung steht. Der Auslauftopfboden 33 weist zwei an die Auslauföffnungen 54, 56 angrenzende Bereiche 62, 64 auf, die in Richtung auf die Auslauföffnungen 54, 56 zu abgeschrägt sind. Dabei erstreckt sich der erste abgeschrägte Bereich 62 aus dem Zwischenraum zwischen der ersten Kammer 42 und der zweiten Kammer 44 heraus in die dritte Kammer 50 hinein. Symmetrisch hierzu erstreckt sich der zweite abgeschrägte Bereich 64 aus dem Zwischenraum zwischen der ersten Kammer 42 und der zweiten Kammer 44 heraus in die vierte Kammer 52 hinein. Entsprechend der hier gewählten Formulierung bilden die abgeschrägten Bereiche 62, 64 einen Bestandteil des Auslauftopfbodens 33. Dies schließt jedoch nicht aus, dass die abgeschrägten Bereiche 62, 64 nicht einstückig mit dem übrigen Auslauftopfboden ausgebildet sind, sondern beispielsweise durch Abschnitte der Auslaufrohre 32a, 32b gebildet werden, ganz oder teilweise.

Im Betrieb der Kaffeemaschine 10 trifft der aus der Brühkammer 24 austretende Kaffeestrahl in die erste Kammer 42, die die hohen ersten Seitenwände 46 aufweist. Dadurch wird eine starke Verwirbelung des Kaffees bewirkt, wodurch ein hochwertiger Cremaschaum gebildet wird. Über den breiten Durchlass zwischen der ersten Kammer 42 und der zweiten Kammer 44 gelangt der Cremaschaum in die zweite Kammer 44, deren zweite Seitenwände 48 zumindest abschnittsweise niedriger ausgebildet sind. Sobald der Cremaschaum die Höhe der niedrigen Abschnitte der zweiten Seitenwände 48 übersteigt, fließt beziehungsweise strömt er in die dritte Kammer 50 sowie die vierte Kammer 52 und von dort in die Auslauföffnungen 54, 56, die mit den Auslaufrohren 32a und 32b in Verbindung stehen. Der Abfluss des Restkaffees erfolgt über den ersten Schlitz 58 und den zweiten Schlitz 60 zwischen den ersten und zweiten Seitenwänden 46, 48.

Durch eine derartige Ausbildung des Auslauftopfes 30 wird eine hochwertige Crema erzeugt. Weiterhin können bis zu zwei Tassen über die Auslaufrohre 32a und 32b gleichzeitig und gleichmäßig mit Kaffee gefüllt werden. Ohne die abgeschrägten Bereiche 62, 64 ergäbe sich zwischen dem Auslauftopfboden 33 und den Auslaufrohren 32a, 32b jeweilige Kanten, die die Kapillarwirkung beim Auslaufen des Kaffees behindern würden. Durch die abgeschrägten Bereiche 62, 64 zwischen dem ebenen Auslauftopfboden 33 und den Auslauföffnungen 54, 56 beziehungsweise den Auslaufrohren 32a, 32b werden diese Kanten durchbrochen beziehungsweise vermieden. Die Schrägen hin zum Auslauf erzeugen einen Sog, der die restliche Flüssigkeit aus dem Auslauftopf 30 herauszieht. Auf diese Weise wird sichergestellt, dass keine Restflüssigkeit in dem Auslauftopf 30 verbleibt, wodurch hygienische Probleme vermieden werden.

Die in der vorstehenden Beschreibung, in den Zeichnungen sowie den Ansprüchen offenbarten Merkmale der Erfindung können sowohl einzeln als auch in beliebiger Kombination für die Verwirklichung der Erfindung wesentlich sein.

### Bezugszeichenliste

- 10: Kaffeemaschine
- 12: Ständerteil
- 14: Vorrats- und Betriebsteil
- 16: Kaffeebereitungsteil
- 18: a-c Bedientasten
- 19: Kontrollleuchte
- 20: Wassertank
- 22: Durchlauferhitzer
- 24: Brühkammer
- 26: Brühkammerunterteil
- 28: Brühkammeroberteil
- 30: Auslauftopf
- 31: Auslaufgehäuse
- 32: Auslaufrohr
- 33: Auslauftopfboden
- 34: Aufnahme
- 36: Aufnahmeboden
- 38: Zentralöffnung
- 40: Austrittsöffnung/Düse
- 42: erste Kammer
- 44: zweite Kammer
- 46: Seitenwände der ersten Kammer
- 48: Seitenwände der zweiten Kammer
- 50: dritte Kammer
- 52: vierte Kammer
- 53: Rippenstruktur
- 54: erste Auslauföffnung
- 56: zweite Auslauföffnung
- 58: erster Schlitz
- 60: zweiter Schlitz
- 62: erster abgeschrägter Bereich
- 64: zweiter abgeschrägter Bereich

## Patentansprüche

1. Kaffeemaschine, insbesondere Espresso- oder Kaffeepad-Maschine, mit einer Brühkammer (24), die eine Austrittsöffnung (40) aufweist, durch die Kaffee in einen Auslauftopf (30) fließt, wobei der Auslauftopf (30) eine erste Kammer (42, 44) und eine zweite kammer (50, 52), die durch zumindest einen Schlitz (58, 60) in Verbindung stehen, durch den Kaffee von der ersten Kammer (42, 44) in die zweite Kammer (50, 52) gelangt, und mindestens eine Auslauföffnung (54, 56) zur Entnahme von Kaffee in der zweiten Kammer (50, 52) aufweist, wobei die Auslauföffnung (54, 56) in einem Auslauftopfboden (33) vorgesehen ist, der in einem an die Auslauföffnung angrenzenden Bereich (62, 64) in Richtung auf die Auslauföffnung (54, 56) zu abgeschrägt ist, **dadurch gekennzeichnet, dass** sich der abgeschrägte Bereich (62, 64) durch den Schlitz (58, 60) hindurch von der ersten Kammer (42, 44) in die zweite Kammer (50, 52) hinein erstreckt.

2. Kaffeemaschine nach Anspruch 1, **dadurch gekennzeichnet, dass** die erste Kammer (42, 44) einen ersten Kammerabschnitt (42) und einen zweiten Kammerabschnitt (44) umfasst, wobei in dem ersten Kammerabschnitt (42) Cremaschaum gebildet wird, der dem zweiten Kammerabschnitt (44) zugeführt wird.

3. Kaffeemaschine nach Anspruch 2, **dadurch gekennzeichnet, dass** der erste Kammer abschnitt (42) und der zweite Kammerabschnitt (44) benachbart zueinander angeordnet und ineinander übergehend ausgebildet sind.

4. Kaffeemaschine nach Anspruch 2 oder 3, **dadurch gekennzeichnet, dass** der zweite Kammerabschnitt (44) zumindest teilweise niedriger als der erste Kammerabschnitt (42) ausgebildet ist.

5. Kaffeemaschine nach Anspruch 4, **dadurch gekennzeichnet, dass** der zweiten Kammer (50, 52) Cremaschaum aus dem zweiten Kammerabschnitt (42) der ersten Kammer (42, 44) zugeführt wird.

## Claims

1. Coffee machine, particularly espresso machine or coffee pad machine, with a brewing chamber (24) having an outlet opening (40) through which coffee flows into an outlet pot (30), wherein the outlet pot (30) has a first chamber (42, 44) and a second chamber (50, 52), which are connected by at least one slot (58, 60) through which coffee passes from the first chamber (42, 44) into the second chamber (50, 52), and at least one outlet opening (54, 56) for removal of coffee in the second chamber (50, 52), wherein the outlet opening (54, 56) is provided in an outlet pot base (33) which in a region (62, 64) adjoining the outlet opening is inclined in direction towards the outlet opening (54, 56), **characterised in that** the inclined region (62, 64) extends through the slot (58, 60) from the first chamber (42, 44) into the second chamber (50, 52).

2. Coffee machine according to claim 1, **characterised in that** the first chamber (42, 44) has a first chamber section (42) and a second chamber section (44), wherein cream froth is formed in the first chamber section (42) and is fed to the second chamber section (44).

3. Coffee machine according to claim 2, **characterised in that** the first chamber section (42) and the second chamber section (44) are arranged adjacent to one another and formed to merge into one another.

4. Coffee machine according to claim 2 or 3, **characterised in that** the second chamber section (44) is formed at least in part to be lower than the first chamber section (42).

5. Coffee machine according to claim 4, **characterised in that** the cream froth from the second chamber section (42) of the first chamber (42, 44) is fed to the second chamber (50, 52).

## Revendications

1. Machine à café, notamment machine à expresso ou à dosettes de café, comprenant une chambre d'infusion (24) qui présente une ouverture de sortie (40) à travers laquelle le café coule dans un récipient d'évacuation (30), le récipient d'évacuation (30) présentant une première chambre (42, 44) et une seconde chambre (50, 52) qui communiquent par au moins une fente (58, 60), à travers laquelle fente le café arrive de la première chambre (42, 44) dans la seconde chambre (50, 52), et au moins une ouverture d'évacuation (54, 56) pour le prélèvement de café dans la seconde chambre (50, 52), l'ouverture d'évacuation (54, 56) étant ménagée dans un fond (33) du récipient d'évacuation, lequel fond est incliné, dans une partie (62, 64) adjacente à l'ouverture d'évacuation, en direction de l'ouverture d'évacuation (54, 56), **caractérisée en ce que** la partie inclinée (62, 64) s'étend de la première chambre (42, 44) dans la seconde chambre (50, 52) en traversant la fente (58, 60).

2. Machine à café selon la revendication 1, **caractérisée en ce que** la première chambre (42, 44) comprend une première section de chambre (42) et une seconde section de chambre (44), de la mousse crémeuse étant formée dans la première section de chambre (42), qui est amenée à la seconde section de chambre (44).

3. Machine à café selon la revendication 2, **caractérisée en ce que** la première section de chambre (42) et la seconde section de chambre (44) sont disposées de manière adjacente l'une à l'autre et **en ce qu'**elles sont réalisées en passant l'une dans l'autre.

4. Machine à café selon la revendication 2 ou 3, **caractérisée en ce que** la seconde section de chambre (44) est réalisée au moins en partie de manière plus basse que la première section de chambre (42).

5. Machine à café selon la revendication 4, **caractérisée en ce que** de la mousse crémeuse provenant de la seconde section de chambre (42) de la première chambre (42, 44) est amenée dans la seconde chambre (50, 52).
